# EUROPEAN PATENT SPECIFICATION

(11) **EP 1 820 303 B1**
(45) Date of publication and mention of the grant of the patent: **11.02.2009**
(21) Application number: 05820494.2
(22) Date of filing: 30.11.2005
(51) Int. Cl.: H04L 12/40

(54) **INTERFACE AND METHOD FOR TRANSMITTING BITS TO A TWO-WIRE BUS APPLYING A LIN PROTOCOL**
SCHNITTSTELLE UND VERFAHREN ZUR ÜBERTRAGUNG VON BITS AN EINEN ZWEIDRAHT-BUS, DER EIN LIN-PROTOKOLL ANWENDET
INTERFACE ET PROCEDE DE TRANSMISSION DE BITS A UN BUS BIFILAIRE APPLIQUANT UN PROTOCOLE LIN

(30) Priority: 01.12.2004 EP 04106198
(43) Date of publication of application: 22.08.2007
(73) Proprietor: NXP B.V., 5656 AG Eindhoven (NL)
(72) Inventor: WESER, Marcus, c/o Philips Int. Pty. & Stand. GmbH, 52066 Aachen (DE); MUTH, Matthias, c/o Philips Int. Pty & Stand. GmbH, 52066 Aachen (DE); SUERMANN, Thomas, c/o Philips Int Pty & Stand GmbH, 52066 Aachen (DE)
(74) Representative: van der Veer, Johannis Leendert
(86) International application number: PCT/IB2005/053972
(87) International publication number: WO 2006/059285

(56) References cited:
- DE-A1- 10 261 736
- US-B1- 6 363 066
- US-B1- 6 672 281
- ROSS BANNATYNE KEVIN KLEIN: "CHASSIS CONTROL SYSTEM TO INTERFACE SENSORS AND ELECTRONIC CONTROL UNITS" IP.COM JOURNAL, IP.COM INC., WEST HENRIETTA, NY, US, 28 August 2002 (2002-08-28), XP013004400 ISSN: 1533-0001 cited in the application

## Description

The present invention relates to an interface comprising at least one physical layer and to a method for transmitting at least one bit to at least one two-wire bus, in particular to at least one C[ontroller]A[rea]N[etwork] bus, for example based on the ISO 11898 standard.

In throttle valve applications and/or gas pedal applications, as described for example in the document US 6 672 281 B1 or on the Internet site http://www.auto-solve.com/etc.htm, use is currently made primarily of potentiometers. In this case, the throttle valve sensor which is used is a variable resistor which, depending on the angle of the throttle valve, transmits a variable signal to correct the injection quantity, for example when speeding up or slowing down.

Such potentiometers are at present being gradually replaced by contactless angle sensors. In this case, use is made primarily of Hall sensors or A[nisotropic]M[agneto]-R[esistive] sensors. Such sensors are described for example in the document DE 101 54 154 A1 or in the document US 2002/0149358 A1.

The angle information is transmitted in an analog fashion, that is to say the angle signal is a linear function of the output voltage Vout of the sensors. This output voltage Vout is typically around 2.5 percent to about 95 percent of the supply voltage, and the projected angle range is up to 120 degrees. In this case, small angles, for example angle ranges from zero degrees to about twenty degrees, are of particular interest for reasons of engine control in throttle valve applications.

One particular disadvantage of analog transmission is the small signal voltages at these small angles. Typical interference voltages of for example fifty millivolts, as occur for example in the engine space of cars for reasons of E[lectro]M[agnetic]C[ompatibility], therefore lie fully within the signal range and lead to interference.

When digital interfaces are used as an alternative for angle sensors, the following disadvantages are obtained:
- the P[ulse]W[idth]M[odulation] protocol, which is used for example in the case of Hall sensors, is too slow;
- the S[erial]P[eripheral]I[nterface] principle is optimized only for short distances; in the case of a cable length of two meters for example, problems arise in terms of electromagnetic compatibility and for this reason screened lines have to be used.
Another disadvantage in the known PWM and SPI solutions is that usually just one sensor per PWM interface is possible or a large number of lines are used in the case of SPI.

Use may alternatively be made of the various bus systems used in the motor vehicle, such as the C[ontroller]A[rea]N[etwork] and L[ocal]I[nterconnect]N[etwork] (cf. C. Gabriel and H. Horia: "Integrating Sensor Devices in a LIN bus network", 26th ISSE 2003, pages 150 to 153, or R. Bannatyne and K. Klein: "Chassis Control System to Interface Sensors and Electronic Control Units", Motorola Inc. 1999, pages 137 to 144). However, CAN is too expensive and over-specified for simple sensor applications, whereas LIN does not provide the necessary data throughput for these sensor applications.

For digital data transmission in a network which can be supplied with a DC voltage of 12 Volt to 42 Volt by a vehicle battery, the company Yamar offers a D[irect]C[urrent] bus which is compatible with protocols relating to CAN, LIN or J1850 (cf. http://www.yamar.com/). However, the EMC properties of this D[irect]C[urrent] bus are regarded as requiring improvement.

There is therefore a need, especially in respect of angle sensors in the motor vehicle sector, to provide a novel sensor interface, in particular a digital sensor interface, which on the one hand is cost-effective and EMC-safe and on the other hand permits a rapid data throughput.

Based on the abovementioned disadvantages and deficiencies and with acknowledgement of the outlined prior art, it is an object of the present invention to further develop an interface of the aforementioned type and also a method of the aforementioned type in such a way that particularly good EMC properties and a high transmission rate, for example a data transmission rate of one megabit per second, are provided while being cost-effective to manufacture.

This object is achieved by an interface having the features specified in claim 1 and by a method having the features specified in claim 8. Advantageous embodiments and expedient developments of the present invention are characterized in the respective dependent claims.

By cleverly combining the physical layer, in particular the C[ontroller]A[rea]N[etwork] physical layer, and the L[ocal]I[nterconnect]N[etwork] protocol, it is possible to combine the cost advantage of the LIN protocol with the EMC properties of the physical layer in such a way that a cost-effective and EMC-legitimate interface, in particular sensor interface, is ultimately produced, for example for motor vehicle applications. For example, an angle sensor with a CAN physical layer which operates with a LIN protocol can be used in particular for electronic control systems in the vehicle sector.

Transmission of the cost-effective LIN protocol via an EMC-optimal CAN physical layer allows the connection of rapid sensors via the bus system, for example in the vehicle.

A so-called "physical layer" is a bit transmission layer or a physical level which is responsible for the bit transmission of the data. The physical layer (= first layer in the O[pen]S[ystems]I[nterconnection] reference model) usually defines the electronic, functional and procedural parameters and aids for the physical connection between units on a network. Such a physical layer may be used, for example in a vehicle, for data transmissions of up to one Megabaud (= Megabit per second).

The two-wire bus which is used according to the invention, in particular a so-called "High Speed CAN Physical Layer", is characterized by particularly good EMC properties which are achieved by virtue of a differential transmission via at least two bus lines. By way of example, according to one advantageous embodiment of the present invention, the physical layer is designed for differential transmission of the bits
- via at least a first transmission line, in particular via the C[ontroller]A[rea]-N[etwork]H[igh] line, and
- via at least a second transmission line, in particular via the C[ontroller]-A[rea]N[etwork]L[ow] line.

By contrast, the LIN bus system conventionally makes use of a so-called single-wire physical layer, which for reasons of electromagnetic compatibility can be used only for up to about twenty kilobits per second and thus is too slow for example for sensor applications in a vehicle.

The advantage of LIN lies in the simple bus protocol which can be converted into software on standard microcontrollers using a serial/parallel converter, for example the U[niversal]A[synchronous]R[eceiver]T[ransmitter] / S[erial]C[ommunication]I[nterface]. This UART/SCI interface is usually available in standard microcontrollers. By contrast, a CAN protocol controller is usually not available in conventional microcontrollers, and for this reason the use of a CAN protocol controller is conventionally associated with corresponding additional costs. DE 102 61 736-A1 discloses a system comprising CAN buses and an interface for a LIN bus.

The present invention also relates to a device, in particular an actuator or a sensor, for detecting and/or recording and/or forwarding at least one property and/or setting and/or information item and/or change in the property and/or setting and/or information item which can be converted into at least one bit,
- comprising at least one interface of the type described above, and/or
- operating in accordance with the method of the type described above.

In this case, the device may be designed as at least one contactless angle sensor, in particular as at least one A[nisotropic]M[agneto]R[esistive] sensor and/or as at least one Hall sensor. AMR angle sensors offer a special advantage since they operate inter alia with digital signal processing and therefore have a digital interface. This is particularly advantageous since there is thus no need for any signal conversion from digital to analog in the sensor and from analog to digital at a control unit.

Advantageously, such an angle sensor element may be formed at least partially of at least one ferromagnetic alloy, for example of permalloy. Permalloy (Ni₈₀Fe₂₀) offers the advantage that it allows a high magnetic permeability with simultaneously low field strength and a low hysteresis loss. The magnetic properties of such ferromagnetic structures can be set in the desired manner by virtue of the external shape.

The present invention also relates to a circuit arrangement, in particular an integrated circuit, having
- at least one transmitting/receiving unit, in particular at least one C[ontroller]A[rea]N[etwork] transceiver, which is connected to at least one device of the aforementioned type via at least one two-wire bus, in particular via at least one C[ontroller]A[rea]N[etwork] bus, for example based on the ISO 11898 standard, and
- at least one microcontroller which is connected to the transmitting/receiving unit, in particular based on the S[erial]C[ommunication]I[nterface] / U[niversal]-A[synchronous]R[eceiver]T[ransmitter] standard.

Another advantageous criterion of the present invention compared to the prior art is the fact that such a circuit arrangement has optimal EMC properties and it moreover makes it possible to connect a number of devices, in particular a number of sensors or a number of actuators, to a two-wire bus. Here, use may be made of cost-effective devices since according to the invention the transmission takes place on the basis of the LIN protocol and thus no complicated protocol is required.

With regard to the advantages which can be achieved by virtue of the present invention, it should furthermore be noted that both the LIN protocol which is used according to the invention and also the CAN physical layer which is advantageously used in each case represent an accepted standard per se.

The present invention finally relates to the use of at least one interface of the aforementioned type and/or of at least one device of the aforementioned type and/or of at least one circuit arrangement of the aforementioned type and/or of a method of the aforementioned type for electronic applications in a vehicle, in particular for angle measurement, for example contactless angle measurement, for instance in throttle valve applications and/or in gas pedal applications.

In particular, the invention can be used in the motor vehicle sector, for example in connection with at least one throttle valve sensor from the company Philips and with at least one CAN physical layer.

As already mentioned above, there are various possibilities for advantageously configuring and developing the teaching of the present invention.

The invention will be further described with reference to examples of embodiments shown in the drawing to which, however, the invention is not restricted.

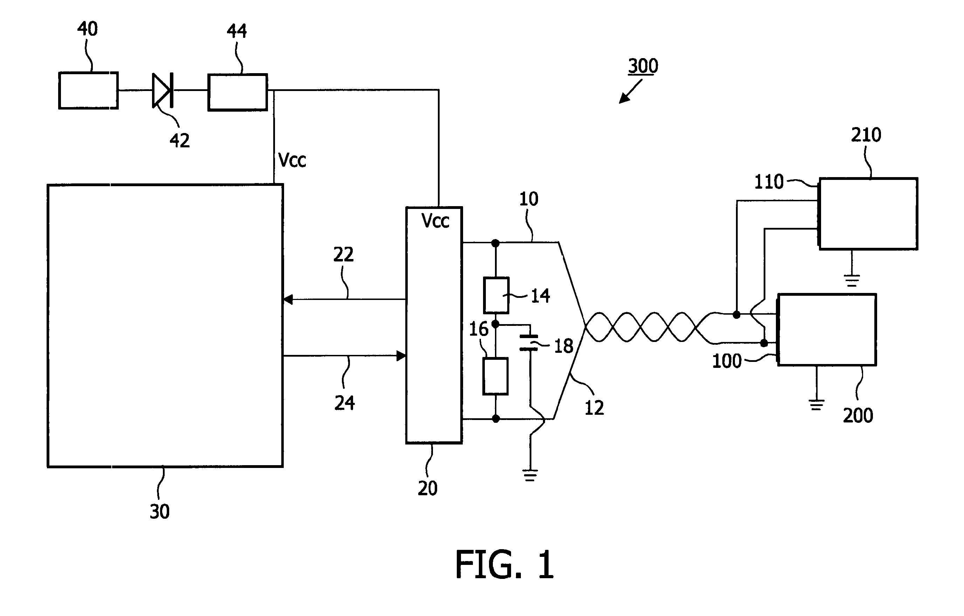

Fig. 1 schematically shows an example of embodiment of a circuit arrangement according to the present invention which operates in accordance with the method according to the invention.

The circuit arrangement 300 according to the present invention which is illustrated in Fig. 1 comprises an example of embodiment of an interface 100 according to the present invention. The interface 100 operates in accordance with the method according to the present invention and is assigned to an example of embodiment of a device 200 according to the present invention, namely to a sensor for detecting vehicle-related parameters.

The circuit arrangement 300 furthermore comprises a second interface 110 according to the present invention which likewise operates in accordance with the method according to the present invention and is assigned to a second sensor 210, namely to a detection unit for recording the environmental parameters of the motor vehicle.

The interfaces 100, 110 are both connected to one and the same two-wire bus 10, 12, namely to a so-called CAN bus, the physical layer of which is defined in accordance with DIN ISO 11898. The data bus 10, 12 has two data bus lines, namely
- CANH[igh] (--> reference 10) and
- CANL[ow] (--> reference 12),
via which the bits are transmitted - optionally differentially.

In the rest state of the CAN bus, both data bus lines 10, 12 are at approximately the same potential since the two lines 10, 12 are connected to one another via two (terminal) resistances 14, 16 of for example thirty Ohms in each case. Connected between these two terminal resistances 14, 16 is a capacitor 18 which has a capacitance of for example 4.7 nanofarad, and the capacitive partial element of said capacitor which is not assigned to the terminal resistances 14, 16 is at ground, that is to say is connected to ground potential GND (i.e. is "earthed").

When individual bits are transmitted by the sensor elements 200, 210, the potential of the data bus line CANH 10 is raised and the potential of the data bus line CANL 12 is correspondingly lowered.

In the circuit arrangement 300 shown in Fig. 1, this takes place by means of at least one driver integrated in the transceiver 20. In the example of embodiment shown in Fig. 1, this driver is arranged in the transmitting/receiving unit 20, namely in the transceiver of the type TJA1040 from the company Philips (cf. corresponding Philips Data Sheet in the version dated 14 October 2003) or of comparable types such as for example TJA1050, TJA1041, etc.

This transceiver 20 receives and transmits data via the CAN bus 10, 12 by means of at least one receiver integrated in the transceiver 20 and by means of at least one transmitter integrated in the transceiver 20. The analog data received via the CANH line 10 and via the CANL line 12 are converted into digital data by the transceiver 20, and said data are forwarded to at least one RxD terminal (--> reference 22).

It is also possible according to the invention to use at least one sensor or actuator with digital signal processing and with a digital interface instead of the analog sensors 200, 210. The interface 100, 110 according to the invention can thus operate in an analog and/or digital manner. In the case of a device 200, 210 with digital signal processing and with a digital interface 100, 110, there is no need for signal conversion from digital to analog in the device 200, 210 and from analog to digital at a control unit, for example at the transceiver 20.

By means of the RxD signal coming from the RxD terminal of the transceiver 20 and transported via the RxD line 22, and by means of the TxD signal transported via the TxD line 24 and arriving at the TxD terminal of the transceiver 20, the transceiver 20 communicates with a microcontroller 30 with a S[erial]C[ommunication]I[nterface] module.

The transmission of the output signals of the transceiver 20 on the CAN bus lines 10, 12 is optimized and defined by the use of a so-called (time-out &) slope unit which is integrated in the transceiver 20, in such a way that very low electromagnetic emission occurs.

The transceiver 20 may also be switched into a standby mode, for example in order to save power. In this standby mode, the receiver and the transmitter of the transceiver 20 are switched off, and the bus lines 10, 12 are monitored by a differential low-power receiver.

For power supply purposes, the transceiver 20 and the microcontroller 30 are supplied with a supply voltage Vcc by the (car) battery 40 which has a rectifier diode 42 and a voltage regulator 44 connected downstream. The two sensors 200, 210 are connected to ground potential as reference potential, that is to say are earthed.

### LIST OF REFERENCES

- 100: interface, in particular interface of the device 200
- 110: interface, in particular interface of the second device 210
- 10, 12: two-wire bus, in particular C[ontroller]A[rea]N[etwork] bus, for example in accordance with ISO 11898 standard, and herein:
- 10: first transmission line of the two-wire bus 10, 12, in particular C[ontroller]A[rea]N[etwork]H[igh] line
- 12: second transmission line of the two-wire bus 10, 12, in particular C[ontroller]A[rea]N[etwork]L[ow] line
- 14: resistance, in particular terminal resistance assigned to the C[ontroller]A[rea]N[etwork]H[igh] line 10
- 16: resistance, in particular terminal resistance assigned to the C[ontroller]A[rea]N[etwork]L[ow] line 12
- 18: capacitive element, in particular capacitor
- 20: transmitting/receiving unit, in particular C[ontroller]A[rea]N[etwork] transceiver, for example of the type TJA1040 high speed CAN transceiver from the company Philips
- 22: receiving line (RxD)
- 24: transmitting line (TxD)
- 30: microcontroller, in particular based on the S[erial]C[ommunication]I[nterface] / U[niversal]A[synchronous]R[eceiver]T[ransmitter] standard
- 40: battery, in particular motor vehicle battery
- 42: diode or rectifier
- 44: voltage regulator
- 200: device, in particular actuator or sensor, for example first device, first actuator or first sensor
- 210: second device, in particular second actuator or second sensor
- 300: circuit arrangement, in particular integrated system
- Vcc: supply voltage

## Claims

1. A circuit arrangement (300), comprising:
at least one two-wire CAN bus (10, 12),
at least one transmitting/receiving unit (2) comprising a CAN transceiver (20) and being connected to the at least one two-wire CAN bus (10, 12), and
at least one device comprising an interface connected to the at least one two-wire CAN bus, the device further comprising at least one of an actuator or a sensor,
**characterised in that** the circuit arrangement is configured to transmit data on a bit transmission layer in accordance with a LIN protocol over the two-wire CAN bus.

2. A circuit arrangement, as claimed in claim 1, further comprising a microcontroller connected to the CAN transceiver (2).

3. A circuit arrangement as claimed in claim 2, wherein the microcontroller has a universal asynchronous receiver transmitter serial communication interface.

4. A circuit arrangement as claimed in any of claims 1 to 3, wherein the at least one of an actuator or a sensor comprises a contactless AMR angle sensor.

5. A circuit arrangement as claimed in any of claims 1 to 3, wherein the at least one of an actuator or a sensor comprises a contactless Hall angle sensor.

6. A circuit arrangement as claimed in claim 4 or 5, wherein the at least one of an actuator or a sensor is formed at least partially of a ferromagnetic alloy.

7. A circuit arrangement as claimed in claim 6, wherein the ferromagnetic alloy is permalloy.

8. A circuit arrangement as claimed in any preceding claim, wherein the at least one two-wire CAN bus is defined in accordance with the DIN ISO 11898 standard.

9. A circuit arrangement as claimed in claim 8, wherein the at least one two-wire CAN bus is configured to transmit bits differentially between the two wires.

## Patentansprüche

1. Schaltungsanordnung (300), umfassend:
wenigstens einen Zweidraht-CAN-Bus (10, 12),
wenigstens eine Sende/Empfangseinheit (2), die einen CAN-Sendeempfänger (20) umfasst und mit dem wenigstens einen Zweidraht-CAN-Bus (10, 12) verbunden ist, und
wenigstens eine Vorrichtung, die eine Schnittstelle umfasst, die mit dem wenigstens einen Zweidraht-CAN-Bus (10,12) verbunden ist, wobei die Vorrichtung ferner wenigstens einen Aktuator oder einen Sensor umfasst,
**dadurch gekennzeichnet, dass** die Schaltungsanordnung so konfiguriert ist, dass sie Daten auf einer Bitübertragungsschicht gemäß einem LIN-Protokoll über den Zweidraht-CAN-Bus (10, 12) übermittelt.

2. Schaltungsanordnung nach Anspruch 1, die ferner einen mit dem CAN-Sendeempfänger (2) verbundenen Mikrocontroller umfasst.

3. Schaltungsanordnung nach Anspruch 2, wobei der Mikrocontroller eine Universal-Asynchron-Empfänger-Sender-Seriell-Kommunikationsschnittstelle aufweist.

4. Schaltungsanordnung nach irgendeinem der Ansprüche 1 bis 3, wobei der wenigstens eine Aktuator und/oder Sensor einen kontaktlosen AMR-Winkelsensor umfasst.

5. Schaltungsanordnung nach irgendeinem der Ansprüche 1 bis 3, wobei der wenigstens eine Aktuator und/oder Sensor einen kontaktlosen Hall-Winkelsensor umfasst.

6. Schaltungsanordnung nach Anspruch 4 oder 5, wobei der wenigstens eine Aktuator und/oder Sensor wenigstens teilweise aus einer ferromagnetischen Legierung gebildet ist.

7. Schaltungsanordnung nach Anspruch 6, wobei die ferromagnetische Legierung eine Permalloy-Legierung ist.

8. Schaltungsanordnung nach irgendeinem der vorangehenden Ansprüche, wobei der wenigstens eine Zweidraht-CAN-Bus gemäß der Norm DIN ISO 11898 definiert ist.

9. Schaltungsanordnung nach Anspruch 8, wobei der wenigstens eine Zweidraht-CAN-Bus so konfiguriert ist, das er Bits differenziell auf den zwei Drähten übermittelt.

## Revendications

1. Agencement de circuit (300), comprenant :
au moins un bus CAN bifilaire (10, 12),
au moins une unité d'émission et de réception (2) comprenant un émetteur-récepteur CAN (20) et étant connectée à au moins un bus CAN bifilaire (10, 12), et
au moins un dispositif comportant une interface connectée à au moins un bus CAN bifilaire, le dispositif comportant, de plus, au moins l'un d'un actionneur ou d'un détecteur,
**caractérisé en ce que** l'agencement de circuit est configuré pour transmettre des données sur une couche de transmission de binaires suivant un protocole LIN sur le bus CAN bifilaire.

2. Agencement de circuit selon la revendication 1, comprenant, de plus, un microcontrôleur connecté à l'émetteur-récepteur CAN (2).

3. Agencement de circuit selon la revendication 2, dans lequel le microcontrôleur possède une interface universelle de communication asynchrone série avec un émetteur-récepteur.

4. Agencement de circuit selon l'une quelconque des revendications 1 à 3, dans lequel au moins l'un d'un actionneur ou d'un détecteur comporte un détecteur d'angle AMR sans contact.

5. Agencement de circuit selon l'une quelconque des revendications 1 à 3, dans lequel au moins l'un d'un actionneur ou d'un détecteur comprend un détecteur d'angle de Hall sans contact.

6. Agencement de circuit selon la revendication 4 ou 5, dans lequel au moins l'un d'un actionneur ou d'un détecteur est formé, au moins partiellement, d'un alliage ferromagnétique.

7. Agencement de circuit selon la revendication 6, dans lequel l'alliage ferromagnétique est du permalloy.

8. Agencement de circuit selon l'une quelconque des revendications précédentes, dans lequel le au moins un bus CAN bifilaire est défini selon la norme DIN ISO 11898.

9. Agencement de circuit selon la revendication 8, dans lequel le au moins un bus CAN bifilaire est configuré pour transmettre des binaires en mode différentiel entre les deux fils.
